# EUROPÄISCHE PATENTANMELDUNG

(11) **EP 0 889 259 A1**
(43) Veröffentlichungstag der Anmeldung: **07.01.1999**
(21) Anmeldenummer: 98107501.3
(22) Anmeldetag: 24.04.1998
(51) Int. Cl.: F16G 5/18

(54) **Laschenkette für stufenlos verstellbare Kegelscheibengetriebe**

(30) Priorität: 02.07.1997 DE 19728181
(71) Anmelder: P.I.V. Antrieb Werner Reimers GmbH & Co KG, 61352 Bad Homburg (DE)
(72) Erfinder: Wagner, Peter, 35444 Biebertal (DE); Schönnenbeck, Gert, Dr., 61352 Bad Homburg (DE); Weitzel, Dirk, 63546 Hammersbach (DE); Gerats, Jochen, 61348 Bad Homburg (DE); Maier, Manfred, 64380 Rossdorf (DE); Wolf, Hans-Jürgen, 61350 Bad Homburg (DE); Kell, Georg, 60599 Frankfurt (DE)
(74) Vertreter: Lemcke, Rupert, Dipl.-Ing.

(57) **Zusammenfassung**

Es wird eine Laschenkette für stufenlos einstellbare Kegelscheibengetriebe angegeben, deren die einzelnen Kettenglieder verbindenden Gelenkstücke als Paare von Wiegestücken (24) ausgebildet sind, wobei die Reibflächen der Kegelscheiben und die Stirnflächen (23) der Wiegestücke eine einem bogenförmigen Verlauf entsprechende, aufeinander zu gerichtete Balligkeit aufweisen. Dabei ist vorgesehen, daß wenigstens ein Teil der Außenlaschen der Kette als den zwischen Kegelscheiben und Kette auftretenden Anpreßkräften widerstehende, biegesteife Drucklaschen (21) ausgebildet sind, daß die Drucklaschen (21) an den ihrem Kettenglied die zugeordneten Wiegestücken (24) gegen die Wirkung der Anpreßkräfte abgestützt sind, und daß die den Kegelscheiben zugewandten Seitenflächen (22) der Drucklaschen (21) wenigstens im Bereich der Wiegestückstirnflächen eine den Wiegestückstirnflächen (23) entsprechende Balligkeit aufweisen.

## Beschreibung

Die Erfindung betrifft eine Laschenkette für stufenlos übersetzungseinstellbare Kegelscheibengetriebe, deren die einzelnen durch Laschenpakete gebildeten Kettenglieder verbindenden Gelenkstücke als Paare von in Aussparungen der Laschen eingeschobenen Wiegestükken mit sich aufeinander abwälzenden Wiegeflächen ausgebildet sind, wobei die Wiegestücke mit den ihrem Kettenglied zugehörenden Laschenpaketen über eine formschlüssige Drehsicherung verbunden sind und wobei die der jeweiligen Kegelscheibe zugewandten Stirnflachen der Wiegestücke an der Reibkraftübertragung zwischen Kegelscheiben und Laschenkette teilnehmen sowie die Reibflächen der Kegelscheiben und die Stirnflächen der Wiegestücke eine einem bogenförmigen Verlauf entsprechende, aufeinander zu gerichtete Balligkeit aufweisen.

Derartige Laschenketten sind unter anderem durch die DE-PS 1 065 685, 28 48 167, 30 27 834, 33 24 318, 34 47 092, 36 27 815, 38 19 599 und 38 26 809 bekannt. Dabei finden als Gelenkstücke Paare von Wiegestücken, die sich aufeinander abwälzen, Verwendung. Die Zielrichtung derart bekannter Ketten geht unter anderem dahin, Schwingungen zwischen Kette und Kegelscheiben verursacht durch die Stöße beim Zustandekommen von deren gegenseitigem Eingriff zu reduzieren und einen ruhigeren Lauf sowie eine höhere Lebensdauer zwischen Kette und Kegelscheiben zu erreichen. Dies geschieht z. B. durch eine ungleiche Kettenteilung, also einen unterschiedlichen Abstand zwischen den Gelenkstücken, oder durch eine Herabsetzung der Kettenteilung mittels entsprechender Ausbildung der Laschen einerseits sowie der Wiegestücke andererseits.

Durch die DE-PS 34 13 384 sind derartige Laschenketten dadurch weiterentwickelt, daß in Längsrichtung der Kette zwischen den durch die Wiegestücke gebildeten Gelenkstellen die Laschenpakete umgebende, in Kettenlaufrichtung und quer dazu abgestützte elastische Rahmen angeordnet sind, die die Reibscheiben elastisch berühren. Dadurch ist erreicht, daß im Hinblick auf die Geräuschentwicklung die Erregerfrequenz zwischen Kette und Kegelscheiben stark erhöht wird, wobei gleichzeitig die Energie der Einzelimpulse verringert wird. Darüber hinaus können die Rahmen im Bereich Ihrer Elastizität in Grenzen an der Reibkraftübertragung teilnehmen.

Hierbei ist jedoch nachteilig, daß die Rahmen die Bauhöhe der Kette vergrößern und dadurch den Stellbereich des Getriebes verringern, wenn man nicht die Bemessung der im Bereich der Kette befindlichen Getriebeteile, beispielsweise des Gehäuses entsprechend anpaßt, was jedoch zu einem Mehraufwand an Platz und Material führt.

Darüber hinaus ist wie gesagt die Möglichkeit der Teilnahme der Rahmen an der Reibkraftübertragung äußerst beschränkt bzw. gering und nur im Bereich deren Elastizität möglich. Denn würden die Rahmen voll in die Reibkraftübertragung mit einbezogen und den zwischen Kegelscheiben und Kette herrschenden Anpreßkräften entsprechend ausgesetzt, würde diese Belastung auf die innerhalb der Rahmen befindlichen Laschenpakete der Kette gehen und zwischen deren Einzellaschen zu einer Reibungsbelastung führen, die die alsbaldige Zerstörung der Kette zur Folge hätte.

Aufgabe der Erfindung ist es daher, eine Laschenkette der eingangs genannten Art dahingehend weiter auszubilden, daß im Bereich zwischen den Gelenkstücken befindliche Kettenteile einerseits voll an der Reibkraftübertragung teilnehmen, sich andererseits dadurch aber keine Einschränkung des Übersetzungstellbereiches des Getriebes ergibt.

Diese Aufgabe ist erfindungsgemäß dadurch gelöst, daß wenigstens ein Teil der Außenlaschen der Kette als den zwischen Kegelscheiben und Kette auftretenden Anpreßkräften widerstehende, biegesteife Drucklaschen ausgebildet sind, daß die Drucklaschen an den ihrem Kettenglied zugeordneten Wiegestücken in deren Längsrichtung gegen die Wirkung der Anpreßkräfte abgestützt sind, und daß die den Kegelscheiben zugewandten Seitenflächen der Drucklaschen wenigstens im Bereich der Wiegestückstirnflächen eine den Wiegestückstirnflächen entsprechende Balligkeit aufweisen.

Durch die DE-PS 1 145 871 sind zwar Laschenketten für Kegelscheibenumschlingungsgetriebe bekannt, bei denen die äußeren Laschen jedes Kettengliedes wenigstens je ein Druckstück für die Übertragung der Reibkräfte aufweisen. Hier bedarf es jedoch zur Abstützung dieser Laschen besonderer, das zugeordnete Laschenpaket durchquerender Stützbolzen, deren Unterbringung die Kettenteilung erheblich vergrößert. Im übrigen nehmen aber bei diesen Ketten die Wiegegelenkbolzen an der Reibkraftübertragung nicht teil, womit eine vom vorstehenden abweichende Gattung von Ketten gegeben ist.

Die erfindungsgemäßen Maßnahmen haben zunächst die Wirkung, daß zur zusätzlichen Reibkraftübertragung entsprechend ausgebildete Kettenlaschen unmittelbar herangezogen werden, somit Bauteile einer solchen Größe, durch die die Bauhöhe der Kette keine Änderung erfährt, somit auch eine Einschränkung des Übersetzungsstellbereiches des Getriebes nicht auftritt.

Zum anderen bewirkt die Abstützung der Drucklaschen über die Wiegestücke, daß die auf die Drucklaschen wirkenden Anpreßkräfte nicht auf die neben den Drucklaschen positionierten übrigen Kettenlaschen übertragen werden, somit diese übrigen Laschen sich in der herkömmlichen Weise ohne Querdruck frei gegeneinander bewegen können.

Dadurch, daß die Seitenflächen der Drucklaschen eine den reibkraftübertragenden Stirnflächen der Wiegestücke entsprechende Gestaltung aufweisen, nehmen die Drucklaschen in der den Wiegestükken entsprechenden Weise an der Reibkraftübertragung teil, insbesondere im Hinblick auf ihre Paarung mit den Reibflächen der Kegelscheiben und die damit einhergehenden Verhältnisse hinsichtlich der Flächenpressung und des Wanderns der Kontaktstellen über den Übersetzungstellbereich des Getriebes.

Durch die biegesteife Gestaltung der Drucklaschen ist schließlich sichergestellt, daß die Drucklaschen unter den auftretenden Anpreßkräften nicht ausweichen können, bezüglich ihrer Festigkeit vielmehr den Kegelscheiben gleichermaßen wie die Wiegestücke gegenübertreten.

Damit kann in Längsrichtung der Kette gesehen praktisch der gesamte zwischen den Stirnflächen der Wiegestückpaare gelegene Kettenbereich an der Leistungsübertragung teilnehmen, wodurch sich eine entsprechend weiträumige Verteilung der mit der Reibkraftübertragung verbundene Belastung ergibt. Zum anderen besteht aber durch entsprechende Ausbildung der Seitenflächen der Drucklaschen oder auch durch Freilassen einzelner für Drucklaschen denkbarer Positionen die Möglichkeit, das aus der Berührung mit den Kegelscheiben resultierende Schwingungsverhalten der Kette zu beeinflussen und damit das Laufgeräusch der Kette zu verringern und von auftretenden Einzeltönen zu befreien.

Was die Gestaltung der Drucklaschen betrifft, so kann deren Biegesteifigkeit durch Bemessung von deren Dicke und/oder der Wahl deren Werkstoffes erreicht werden, je nachdem, welche der Möglichkeiten sich im einzelnen Anwendungsfall als zweckmäßig erweist.

Grundsätzlich können außerdem die Drucklaschen auf ihrer den übrigen Kettenlaschen zugewandten Seite eben ausgebildet sein, entsprechend der Ausbildung der übrigen Kettenlaschen. Es besteht jedoch auch die Möglichkeit, daß der mit der jeweiligen Kegelscheibe in Berührung kommende Bereich der Seitenflächen der Drucklaschen durch eine vorspringende Prägung oder eine Verdickung der Drucklaschen gebildet ist.

Wird von der letztgenannten Möglichkeit Gebrauch gemacht, so kann die Prägung oder Verdickung durch einen zwischen den Aussparungen der Drucklaschen befindlichen, im wesentlichen quer zur Längsrichtung der Drucklaschen verlaufenden Steg gebildet sein, was zu dem vielfach ausreichenden Ergebnis führt, daß die Drucklaschen nur mit ihrem zwischen zwei Wiegestückpaaren gelegenen Abschnitt an der Reibkraftübertragung teilnehmen.

Hinsichtlich der Abstützung der Drucklaschen an den Wiegestücken ist es zweckmäßig, daß diese durch formschlüssigen Eingriff wenigstens eines in die Aussparungen der Drucklaschen ragenden Vorsprunges in einer außerhalb des Paketes der übrigen Kettenlaschen gelegene Querschnittsverminderung der den Drucklaschen zugeordneten Wiegestücke gebildet ist. Hier hat also das jeweils betroffene Wiegestück endständig beispielsweise eine Abfräsung, so daß in den dadurch entstandenen Platz eine Nase der zugeordneten Drucklasche greifen kann, die dann die Drucklasche gegen die Anpreßkräfte abstützt, indem sie sich in Anlage an der kettenseitigen Begrenzungswand der Abfräsung befindet. Wesentlich ist hier nur, daß diese Begrenzungswand der Abfräsung außerhalb des Paketes der übrigen Kettenlaschen liegt, damit die jeweilige Drucklasche unter den Anpreßkräften nicht in Anlage an diese übrigen Laschen gelangen kann.

Um die geschilderte Abstützung der Drucklaschen hinsichtlich ihrer Kraftaufnahmefähigkeit zu vergrößern und im übrigen symmetrisch zu gestalten, kann vorgesehen sein, daß die Wiegestücke an quer zur Kettenlängsrichtung einander gegenüberliegenden Seiten je eine an einer Schulter endende Querschnittsverminderung und entsprechend die Aussparungen der Drucklaschen je zwei Vorsprünge aufweisen.

Bei einer anderen Bauform kann die Gestaltung vorteilhafterweise so vorgesehen sein, daß die Wiegestücke die Querschnittsverminderung von der Wiegefläche ausgehend halbkreisförmig über den Restumfang umlaufend und entsprechend die Aussparungen der Drucklaschen einen halbkreisförmig verlaufenden Vorsprung aufweisen, und daß das Zentrum des Kreisverlaufes im wesentlichen auf der Mitte der Wiegeflache der Wiegestücke liegt. Hier wird hinsichtlich der Abstützung der Drucklaschen zwar das gleiche Ergebnis erzielt, es verbindet sich jedoch mit dem formschlüssigen Eingriff von Drucklaschen und Wiegestücken nicht gleichzeitig auch eine Drehsicherung der genannten Teile gegeneinander, wodurch sich eine Entlastung der Paarung dieser Teile ergibt. Das ist insofern ohne weiteres möglich, als die Drehsicherung zwischen Wiegestücken und Laschenpaket des zugeordneten Kettengliedes ohnehin durch die Gestaltung der übrigen Laschen dieses Kettengliedes gegeben ist.

Weitere erfindungswesentliche Merkmale und Einzelheiten ergeben sich aus der nachfolgenden Beschreibung von Ausführungsformen, die in in der Zeichnung dargestellt sind. Dabei zeigen:
- Figur 1: eine bekannte Laschenkette mit 2-Laschen-Verband in Seitenansicht;
- Figur 2: die Seitenansicht einer anderen Bauform einer bekannten Laschenkette;
- Figur 3: eine Draufsicht auf die Laschenkette gemäß Figur 1 oder 2;
- Figur 4: eine Draufsicht entsprechend Figur 3 zur Darstellung des 3-Laschen-Verbandes einer bekannten Laschenkette;
- Figur 5: eine erste Ausführungsform einer erfindungsgemäßen Laschenkette in der Seitenansicht entsprechend Figur 1 und 2;
- Figur 6: eine ausschnittweise Draufsicht auf die Kette gemäß Figur 5;
- Figur 7: eine Schnittansicht gemäß der Schnittlinie VII-VII in Figur 5 und 6;
- Figur 8: die perspektivische Einzelansicht der Drucklasche der Kette nach Figur 5 bis 7;
- Figur 9: die perspektivische Einzelansicht eines Wiegestückpaares der Kette nach Figur 5 bis 7;
- Figur 10: die Seitenansicht entsprechend Figur 1 und 2 einer anderen erfindungsgemäßen Kettenbauform;
- Figur 11: die ausschnittweise Draufsicht auf die Laschenkette gemäß Figur 10;
- Figur 12: eine Schnittansicht gemäß der Schnittlinie XII-XII in Figur 10 und 11;
- Figur 13: eine Drucklasche der Kette nach Figur 10 bis 12, jedoch in weiterer Abwandlung;
- Figur 14: die Seitenansicht einer Laschenkette mit Drucklaschen nach Figur 13; und
- Figur 15: die perspektivische Einzelansicht eines Wiegestückpaares der Laschenkette nach Figur 14.

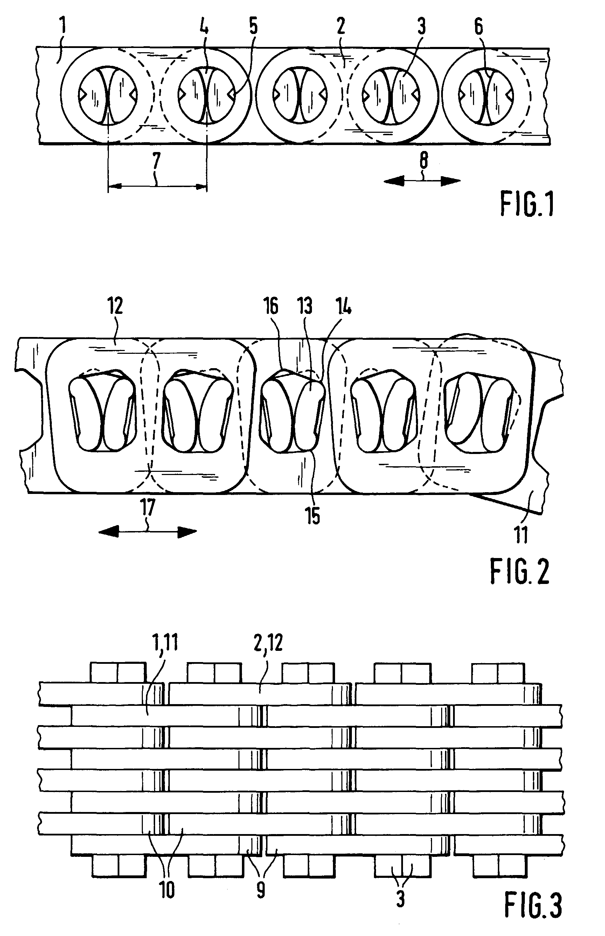

Die Figuren 1 und 3 zeigen Seitenansicht und Draufsicht eines Stückes einer bekannten Laschenkette mit normalen Kettenlaschen 1 und Außenlaschen 2, wobei die Position der Außenlaschen 2 die Breite des Laschenpaketes der Kette bestimmt. Die durch die Laschen 1 und 2 gebildeten Kettenglieder sind gelenkig über Gelenkstücke miteinander verbunden, die aus Paaren von Wiegestücken 3 bestehen, die in Aussparungen 4 der Laschen eingesetzt sind und mit den jeweils zugehörenden Laschen über eine formschlüssige Verbindung 5 drehverbunden sind.

Die Wiegestücke 3 haben aufeinander zu gerichtete konvexe Wiegeflächen 6, über die sie aufeinander abrollen können, woraus sich die Gelenkbeweglichkeit der benachbarten Kettenglieder ergibt.

Die einzelnen Gelenke haben von Mitte zu Mitte einen Abstand 7, den man im allgemeinen als Kettenteilung bezeichnet. Die Größe dieser Kettenteilung 7 ist abhängig von der in Kettenlaufrichtung 8 gegebenen Erstreckung der Wiegestücke 3 sowie dem zwischen den einzelnen Aussparungen 4 erforderlichen Abstand.

Der Seitenansicht gemäß Figur 1 entspricht auch eine andere bekannte Kettenbauform gemäß Figur 2 mit normalen Laschen 11 und Außenlaschen 12, wobei die Gelenkstücke aus Paaren von Wiegestücken 13 bestehen. Diese Wiegestücke 13 haben eine Gestalt derart, daß sie nur an zwei Stellen 14 und 15 an den Laschenaussparungen 16 anlegen. Zwischen den Anlagestellen 14 und 15 sind die Wiegestücke 13 von den Laschen 11, 12 der Kette frei.

Aus der Draufsicht gemäß Figur 3 ist eine Kette im sogenannten 2-Laschen-Verband ersichtlich. Dies bedeutet, daß jeweils 2 radiale Endstege 9 bzw. 10 benachbarter Kettenlaschen zwischen zwei Paaren von Wiegestücken 3 nebeneinander stehen, wodurch entsprechend der Abstand dieser durch Wiegestückepaare gebildeten Gelenke bestimmt ist.

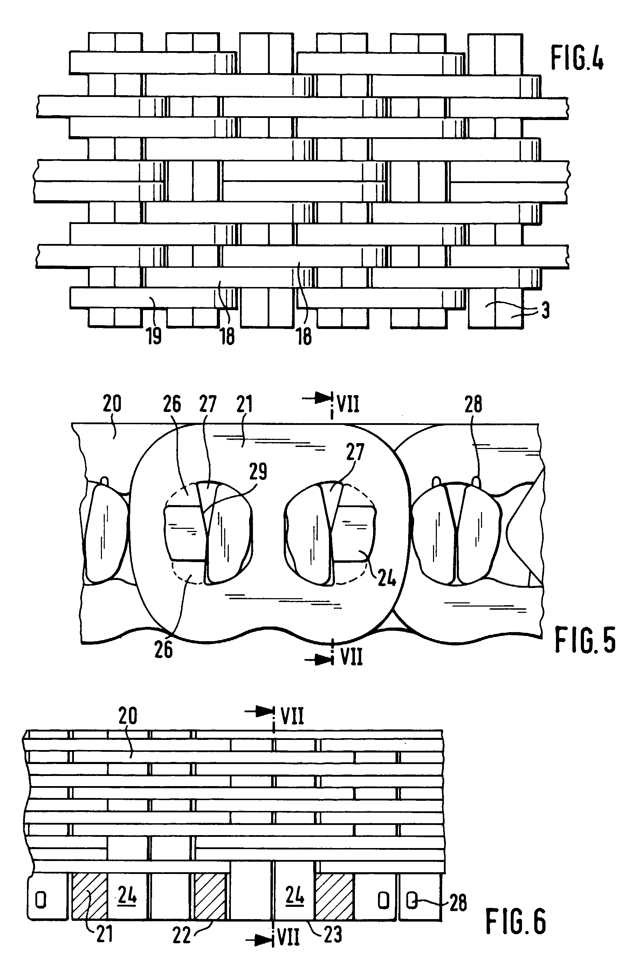

Gemäß Figur 4 ist ersichtlich, wie bekannte Ketten im 3-Laschen-Verband aufgebaut sind. Hier sind über die Breite der Kette gesehen die normalen Laschen 18 und die Endlaschen 19 in der Kettenlaufrichtung jeweils um eine Teilung gegeneinander versetzt, wodurch sich bei gleicher Leistungsübertragungsfähigkeit zwar eine Verbreitung der Kette quer zur Laufrichtung ergibt, wodurch aber auf der anderen Seite der Abstand zwischen den durch Paare von Wiegestücken 3 gebildeten Gelenken gegenüber dem gemäß Figur 3 reduziert werden kann.

Wie eingangs erläutert, wird durch die Kettenteilung 7 bzw. den Abstand der durch die Paare von Wiegestücken 3 gebildeten Gelenkstellen das geräuschmäßige Verhalten der Kette sowie deren Reibkraftübertragungsfähigkeit mitbestimmt. Denn der Einlauf der Wiegestücke zwischen die Kegelscheiben ist mit einem schlagartigen Geräusch verbunden, welches um so lauter ausfällt, je größer die Kettenteilung ist. Je größer die Kettenteilung ist, um so größer wird auch der Anteil, den das einzelne Wiegestückpaar an der Reibkraftübertragung zu übernehmen hat.

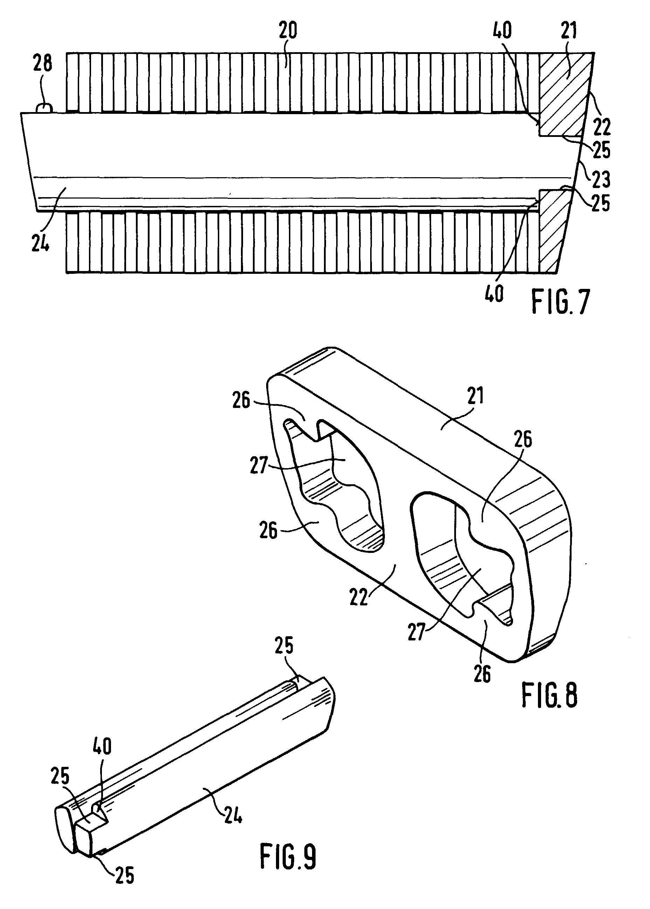

Um hier nun die Zahl der geräuschbildenden Paarungen zwischen Kette und Kegelscheiben zu vergrößern und damit den Geräuschpegel insgesamt herabzusetzen und um die Stirnflächen der Wiegestücke 3 teilweise von der Reibkraftübertragung zu entlasten, sind bei einer Kette nach den Figuren 5 bis 9 mit normalen Laschen 20 die diesen in ihrer Außenkontur entsprechenden Außenlaschen 21 als biegesteife Drucklaschen ausgebildet, deren den nicht dargestellten Kegelscheiben zugewandten Seitenflache 22 wenigstens im Bereich der Stirnflächen 23 der Wiegestücke 24 eine den Wiegestückstirnflächen 23 entsprechende Balligkeit aufweisen. Damit andererseits die Drucklaschen 21 bezüglich der auf sie von den Kegelscheiben übertragenen Anpreßkräfte abgestützt sind, weisen die mit den Drucklaschen 21 zusammenwirkenden Wiegestücke 24 am Ende Aussparungen 25 auf, in die Nasen 26 eingreifen, die in die für die Aufnahme der Wiegestücke 24 dienenden Aussparungen 27 der Drucklaschen 21 hineinragen (siehe Figur 7). Die Aussparungen 25 sind dabei so ausgebildet und angeordnet, daß sie außerhalb des durch die normalen Laschen 20 gebildeten Paketes des jeweiligen Kettengliedes an Schultern 40 enden, so daß die über die Aussparungen 26 abgestützten Drucklaschen das Paket der übrigen Laschen 20 nicht belasten. Im übrigen sind die Aussparungen 25 und Nasen 26 so angeordnet, daß die Nasen 26 im wesentlichen außerhalb der durch die Wiegestücke 24 gebildeten Wiegeflächen 29 liegen, um die Abwälzbewegung zweier benachbarter Wiegestücke 24 bei der Gelenkarbeit nicht zu behindern.

Diese Maßnahmen haben zur Folge, daß die Seitenflächen 22 der Drucklaschen 21 wie die Stirnflächen 23 der Wiegestücke 24 an der Reibkraftübertragung teilnehmen, wobei die Kette nunmehr gegenüber der Kegelscheibe eine mehr oder weniger geschlossene, reibkraftübertragende Fläche aufweist, die entsprechend lokal einer geringeren Flächenpressung ausgesetzt ist und eine hohe Zahl von Berührungstellen mit der Kegelscheibe bildet, die beim Zusammenlauf mit der Kegelscheibe eine hohe Frequenz von Einzeltönen ergibt.

An dem den Aussparungen 25 gegenüberliegenden, freistehenden Ende weisen die Wiegestücke 24 noch ein beispielsweise durch Energiestrahl-Schweißung befestigtes Metallstück 28 auf, durch das die Wiegestücke in gewissem Umfange gegen seitliches Herauswandern aus dem Kettenverbund gesichert sind. (Siehe DE-PS 35 26 062).

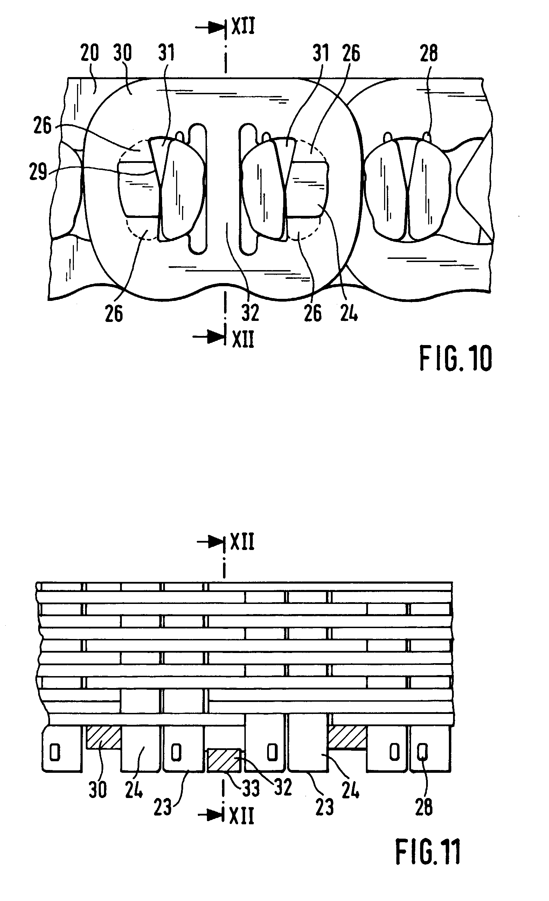

In Abweichung zu dieser Bauform zeigt die Kette gemäß den Figuren 10 bis 12 solche Drucklaschen 30, bei denen, ausgehend von einer ebenen, plattenförmigen Konfiguration, der Bereich zwischen den Aussparungen 31 nach Art eines Steges 32 ausgebildet und aus der plattenförmigen Ebene der Drucklasche 30 hervorspringend geprägt ist, so daß seine Stirnfläche 33 in ihrem Verlauf wiederum den Stirnflächen 23 der benachbarten Wiegestücke 24 entspricht. Für diese Bauform gelten im übrigen die Ausführungen zu der in den Figuren 5 bis 9 dargestellten Bauform entsprechend. Der Unterschied besteht ersichtlich lediglich darin, daß die Drucklaschen 30 in einem geringerem Maße an der Reibkraftübertragung teilnehmen als die Drucklaschen 21.

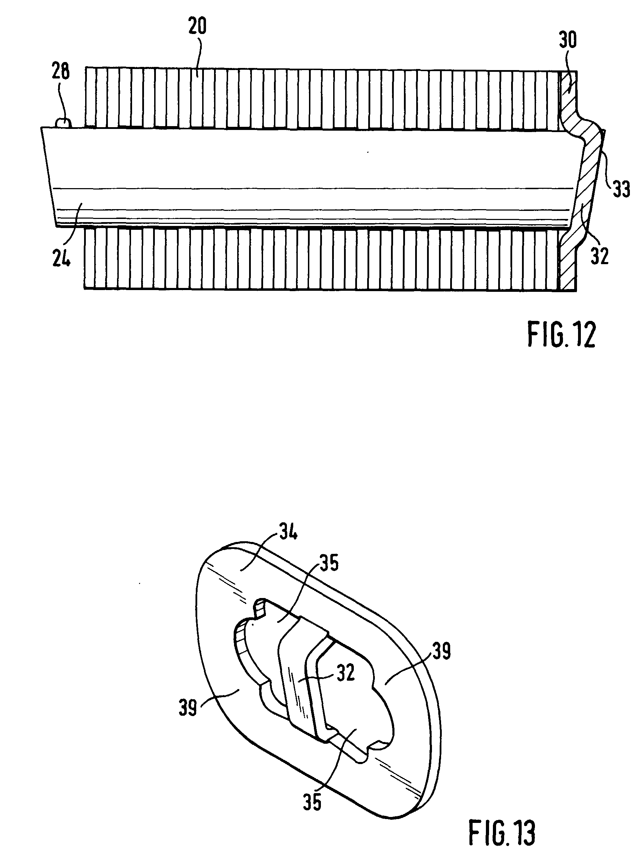

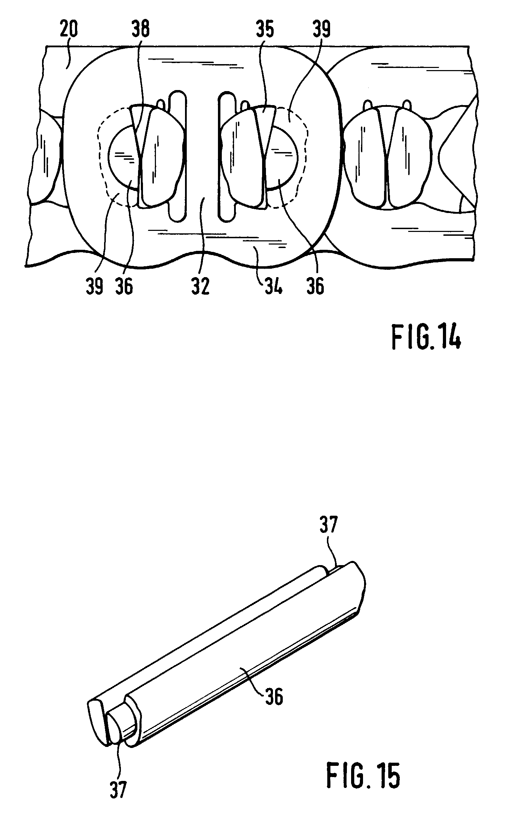

Figur 13 zeigt die einer solchen Drucklasche ähnliche Drucklasche 34 mit einem hervorspringend geprägten Mittelsteg 32, wobei jedoch die Gestaltung der Aussparungen 35 zu Wiegestücken 36 paßt, wie sie anhand der Bauform gemäß Figur 14 beschrieben sind.

Was die Abstützung der Drucklaschen 34 gegenüber diesen Wiegestücken 36 betrifft, so ist deren Querschnittsverminderung 37 von der Wiegefläche 38 ausgehend halbkreisförmig über den Restumfang umlaufend ausgebildet und es weisen die Aussparungen 35 der Drucklaschen 34 einen halbkreisförmig umlaufenden Vorsprung 39 auf, der zu dieser Querschnittsverminderung 37 paßt. Auf diese Weise sind die Drucklaschen 34 und die Wiegestücke 36 nicht miteinander drehverbunden, diesbezüglich also gegenseitig entlastet. Eine solche Bauform ist dadurch möglich, daß die Drehsicherung der Wiegestücke 36 gegenüber dem jeweiligen Kettenglied durch entsprechende Gestaltung der Aussparungen der übrigen Kettenlaschen 20 ohnehin gegeben ist.

Wie die anhand der Figuren 5 bis 15 erläuterten Ausführungformen von Drucklaschen zeigen, können diese je der Größe der reibkraftübertragenden Auflagefläche an der Reibkraftübertragung teilnehmen, wodurch sich insbesondere das Geräuschverhalten der jeweiligen Kette veränderbar ist. Hierzu können auch unterschiedliche der beschriebenen Drucklaschenformen bei ein und derselben Kette Verwendung finden. Eine weitere Variationsmöglichkeit besteht darin, daß - bezogen auf die allgemeine Erläuterung der Figuren 3 und 4 - alle oder nur einzelne der Außenlaschen 2, 12 beziehungsweise 19 durch Drucklaschen ersetzt sind, wobei hier die Anordnung solcher Drucklaschen auch in regelmäßiger oder unregelmäßiger Reihenfolge erfolgen kann.

Insgesamt wird in allen Fällen das Geräuschverhalten der Kette und deren Reibkraftübertragungsfähigkeit verbessert, ohne daß sich dadurch die Bauhöhe der Kette mit eventuell negativem Einfluß auf den Übersetzungsstellbereich des Getriebes ändert.

## Patentansprüche

1. Laschenkette für stufenlos übersetzungseinstellbare Kegelscheibengetriebe, deren die einzelnen durch Laschenpakete gebildeten Kettenglieder verbindenden Gelenkstücke als Paare von in Aussparungen der Laschen eingeschobenen Wiegestücken mit sich aufeinander abwälzenden Wiegeflächen ausgebildet sind, wobei die Wiegestücke mit den ihrem Kettenglied zugehörenden Laschenpaketen über eine formschlüssige Drehsicherung verbunden sind und wobei die der jeweiligen Kegelscheibe zugewandten Stirnflächen der Wiegestücke an der Reibkraftübertragung zwischen Kegelscheiben und Laschenkette teilnehmen sowie die Reibflächen der Kegelscheiben und die Stirnflächen der Wiegestücke eine einem bogenförmigen Verlauf entsprechende, aufeinander zu gerichtete Balligkeit aufweisen,
dadurch gekennzeichnet,
daß wenigstens ein Teil der Außenlaschen der Kette als den zwischen Kegelscheiben und Kette auftretenden Anpreßkräften widerstehende, biegesteife Drucklaschen (21, 30, 34) ausgebildet sind, daß die Drucklaschen (21, 30, 34) an den ihrem Kettenglied zugeordneten Wiegestücken (24, 36) in deren Längsrichtung gegen die Wirkung der Anpreßkräfte abgestützt sind, und daß die den Kegelscheiben zugewandten Seitenflächen (22, 33, 39) der Drucklaschen (21, 30, 34) wenigstens im Bereich der Wiegestückstirnflächen (23) eine den Wiegestückstirnflächen (23) entsprechende Balligkeit aufweisen.

2. Laschenkette nach Anspruch 1,
dadurch gekennzeichnet,
daß die Biegesteifigkeit der Drucklaschen (21, 30, 34) durch Bemessung der Dicke und/oder der Wahl deren Werkstoffes gegeben ist.

3. Laschenkette nach Anspruch 1 oder 2,
dadurch gekennzeichnet,
daß die Drucklaschen (21) auf ihrer den übrigen Kettenlaschen (20) zugewandten Seite eben ausgebildet sind.

4. Laschenkette nach Anspruch 1 oder 2,
dadurch gekennzeichnet,
daß der mit der jeweiligen Kegelscheibe in Berührung kommende Bereich der Seitenflächen (33) durch eine vorspringende Prägung (32) oder eine Verdickung der Drucklaschen (30, 34) gebildet ist.

5. Laschenkette nach Anspruch 4,
dadurch gekennzeichnet,
daß die Prägung oder Verdickung durch einen zwischen den Aussparungen (31, 35) der Drucklaschen (30, 34) befindlichen, im wesentlichen quer zur Längsrichtung der Drucklaschen (30, 34) verlaufenden Steg (32) gebildet ist.

6. Laschenkette nach einem oder mehreren der Ansprüche 1 bis 5,
dadurch gekennzeichnet,
daß die Abstützung der Drucklaschen (21, 30, 34) an den Wiegestücken (24, 36) durch formschlüssigen Eingriff wenigstens eines in die Aussparungen (27, 31, 35) der Drucklaschen (21, 30, 34) ragenden Vorsprunges (26, 39) in eine außerhalb des Paketes der übrigen Kettenlaschen (20) gelegene Querschnittsverminderung (25, 37) der den Drucklaschen (21, 30, 34) zugeordneten Wiegestücke (24, 36) gebildet ist.

7. Laschenkette nach Anspruch 6,
dadurch gekennzeichnet,
daß die Wiegestücke (24) an quer zur Kettenlängsrichtung einander gegenüberliegenden Seiten je eine an einer Schulter (40) endende Querschnittsverminderung (25) und entsprechend die Aussparungen (27, 31) der Drucklaschen (21, 30) je zwei Vorsprünge (26) aufweisen.

8. Laschenkette nach Anspruch 6,
dadurch gekennzeichnet,
daß die Wiegestücke (36) die Querschnittsverminderung (37) von der Wiegefläche (38) ausgehend halbkreisförmig über den Restumfang umlaufend und entsprechend die Aussparungen (35) der Drucklaschen (34) einen halbkreisförmig verlaufenden Vorsprung (39) aufweisen, und daß das Zentrum des Kreisverlaufes im wesentlichen auf der Mitte der Wiegefläche (38) der Wiegestücke (36) liegt.
